# EUROPEAN PATENT APPLICATION

(11) **EP 4 306 300 A1**
(43) Date of publication of application: **17.01.2024**
(21) Application number: 22767542.8
(22) Date of filing: 10.03.2022
(51) Int. Cl.: B29C 65/00, H01M 50/105, B29L 31/00

(54) **BATTERY CELL MANUFACTURING DEVICE**

(30) Priority: 10.03.2021 KR 20210031423; 25.02.2022 KR 20220025119
(71) Applicant: SK On Co., Ltd., Seoul 03161 (KR)
(72) Inventor: CHOI, Gil-Yong, Daejeon 34124 (KR); KIM, Joo-Hyung, Daejeon 34124 (KR); KIM, Hyung-Joon, Daejeon 34124 (KR)
(74) Representative: Stolmár & Partner Patentanwälte PartG mbB
(86) International application number: PCT/KR2022/003388
(87) International publication number: WO 2022/191646

(57) **Abstract**

Provided is a battery cell manufacturing device comprising: a body unit having rigidity; and a formation groove into which at least a part of a sealing portion of a battery cell is inserted to pass therethrough, wherein the formation groove penetrates the body unit in a first direction and the shape of the formation groove changes along the first direction.

## Description

### Technical Field

The present disclosure relates to an apparatus for manufacturing a battery cell.

### Background Art

Recently, a rechargeable battery capable of charging and discharging has been widely used as an energy source for wireless mobile devices. In addition, secondary batteries are attracting attention as a power source for electric vehicles (EVs), hybrid electric vehicles (HEVs) and the like, which are proposed as a way to solve air pollution issues, such as for gasoline, diesel vehicles and the like, using fossil fuels.

On the other hand, the battery cell undergoes a process of folding the bonding portion (or the sealing portion) of the casing of the battery cell during the manufacturing process. Folding refers to bending or folding at least a portion of the sealing portion of the battery cell casing toward the body portion of the battery cell. Since the area of the sealing portion of the battery cell is very narrow compared to the size of the entire battery cell, it is difficult to fold in the desired position, and during the folding process, unnecessary pressure is applied to the electrode assembly or the sealing portion is destroyed, causing a problem in which a battery cell is defective.

### Summary of Invention

### Technical Problem

An aspect of the present disclosure is to increase efficiency and reliability of a manufacturing process of a battery cell. In addition, an aspect of the present disclosure is to enable a process of folding a casing material of a pouch-type battery cell to be stably performed.

### Solution to Problem

According to an aspect of the present disclosure, an apparatus for manufacturing a battery cell includes a body portion having rigidity; and a molded groove configured to allow at least a portion of the sealing portion of the battery cell to be inserted and passed therethrough. The molded groove penetrates the body portion in a first direction, and a shape of the molded groove is changed in the first direction.

In embodiments, the molded groove may comprise an inlet disposed at one end of the body portion in the first direction and configured to allow the sealing portion to be inserted; and an outlet disposed at the other end in the first direction and configured to allow the sealing portion to exit.

In embodiments, shapes of the inlet and the outlet may be different from each other.

In embodiments, the molded groove may include a first molded groove open in a second direction, perpendicular to the first direction, at one side of the body portion; and a second molded groove connected to the first molded groove and inclined with respect to the first molded groove.

In embodiments, an angle between the first molded groove and the second molded groove may be continuously changed in the first direction.

In embodiments, the angle between the first molded groove and the second molded groove may gradually decrease in the first direction.

In embodiments, an angle between the first molded groove and the second molded groove at an end of the body portion in the first direction may be perpendicular.

In embodiments, the body portion may be movable in the first direction.

According to an aspect of the present disclosure, an apparatus for manufacturing a battery cell includes a support unit configured to support a sealing portion of a battery cell, wherein one side of the support unit is configured to face a body portion in which an electrode assembly of the battery cell is accommodated; and a folding unit facing the other side opposite to the one side of the support unit and configured to bend the sealing portion of the battery cell. The folding unit is configured to be movable along the other side of the support unit to bend the sealing portion of the battery cell.

In embodiments, the support unit may include a first support member and a second support member configured to be movable in different directions, and the first support member and the second support member are configured such that the sealing portion of the battery cell can be fixed therebetween.

In embodiments, the first support member and the second support member may be configured to support a boundary between the body portion and the sealing portion.

In embodiments, the folding unit may include a pressure roller configured to be movablefrom a first position facing the first support member to a second position facing the second support member, and the pressure roller may be configured to bend the sealing portion so that the sealing portion comes into contact with the second support member.

In embodiments, the folding unit may further include an auxiliary roller supporting the pressure roller, and the auxiliary roller may be configured to move together in contact with the pressure roller.

In embodiments, a diameter of the auxiliary roller may be equal to or less than a diameter of the pressure roller.

In embodiments, the pressure roller and the auxiliary roller may be respectively rotatable, and an axis of rotation of the auxiliary roller may be parallel to an axis of rotation of the pressure roller.

In embodiments, the auxiliary roller may include a first auxiliary roller and a second auxiliary roller in contact with different portions of the pressure roller, and an angle between a virtual line connecting a center of rotation of the pressure roller and a center of rotation of the first auxiliary roller and a virtual line connecting the center of rotation of the pressure roller and a center of rotation of the second auxiliary roller may be an acute angle.

### Advantageous Effects of Invention

According to the apparatus for manufacturing a battery cell according to the embodiments, the sealing portion of the battery cell may be stably folded at a desired angle.

In the apparatus for manufacturing a battery cell according to embodiments, by effectively folding a partial surface of the sealing portion of the battery cell, a phenomenon in which the sealing of the sealing portion is released may be prevented. In addition, as some surfaces of the sealing portion of the battery cell are folded, the volume of the electrode assembly disposed in the inner space of the module housing having the same size may be increased.

### Brief Description of Drawings

FIG. 1 illustrates a pouch-type battery cell.
FIG. 2 illustrates a process in which a sealing portion of a battery cell is deformed according to a folding process according to embodiments.
FIG. 3 is a flowchart of a folding process according to example embodiments.
FIG. 4 is an illustrative view illustrating a state in which a sealing portion of a battery cell is folded by an apparatus for manufacturing a first battery cell according to embodiments.
FIG. 5 is an illustrative view illustrating a state in which a sealing portion of a battery cell is folded by the apparatus for manufacturing a first battery cell according to the embodiment.
FIG. 6 is a perspective view of an apparatus for manufacturing a second battery cell according to example embodiments.
FIG. 7 is a perspective view of an apparatus for manufacturing a second battery cell according to an embodiment, as viewed from an angle different from that of FIG. 6.
FIG. 8 is an illustrative view illustrating a state in which a sealing portion of a battery cell is folded by the apparatus for manufacturing a second battery cell according to embodiments.
FIG. 9 is an illustrative view illustrating a state in which a sealing portion of a battery cell is folded by an apparatus for manufacturing a third battery cell according to an embodiment.

### Best Mode for Invention

The terms or words used in the present specification and claims described below should not be construed as being limited to conventional or dictionary meanings, and based on the principle that an inventor may appropriately define the concept of a term in order to best describe his invention, it should be interpreted as meaning and concept consistent with the technical spirit of the present disclosure. Therefore, the configurations illustrated in the embodiments and drawings described in this specification are only the most preferred embodiments of the present disclosure, and do not represent all of the technical spirit of the present disclosure, and it should be understood that various equivalents and modifications may be substituted for them at the time of filing.

Hereinafter, preferred embodiments of the present disclosure will be described with reference to the accompanying drawings. However, the embodiment of the present disclosure may be modified in various other forms, and the scope of the present disclosure is not limited to the embodiments described below. In addition, the embodiments of the present disclosure are provided in order to more completely explain the present disclosure to those of ordinary skill in the art. The shapes and sizes of elements in the drawings may be exaggerated for clearer explanation.

Also, in this specification, the singular expression includes the plural expression unless the context clearly dictates otherwise. Throughout the specification, the same reference signs refer to the same elements or corresponding elements.

In addition, in the present specification, expressions such as upper side, upper portion, lower side, lower portion, side surface, front side, back side, and the like are expressed based on the direction illustrated in the drawings, and if the direction of the corresponding object is changed, it may be expressed differently.

In addition, terms including an ordinal number, such as "first", "second", etc. used herein may be used to describe various elements, but the elements are not limited by the terms, and the above terms are used only for the purpose of distinguishing one component from another. For example, without departing from the scope of the present disclosure, a first component may be referred to as a second component, and similarly, a second component may also be referred to as a first component.

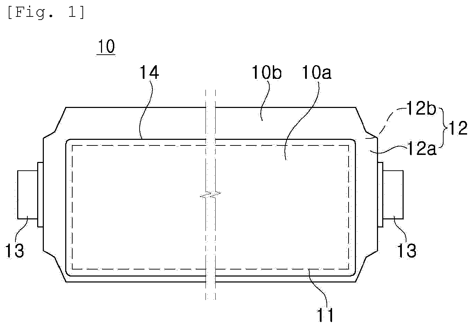

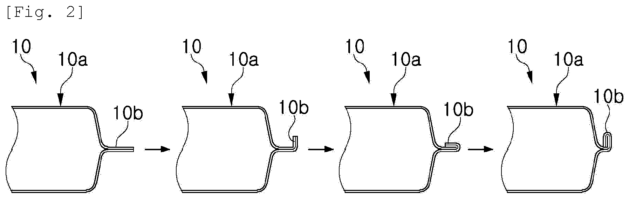

FIG. 1 illustrates a battery cell 10. FIG. 2 illustrates a process in which a sealing portion 10b of the battery cell 10 is deformed according to the folding process according to the embodiments. Hereinafter, a folding process of the battery cell 10 will be described with reference to FIGS. 1 to 2.

First, referring to FIG. 1, the battery cell 10 may be a pouch-type battery cell. The battery cell 10 includes an electrode assembly 11 and a casing 12 (or a pouch) surrounding the electrode assembly 11. The electrode assembly 11 is provided in a form in which positive and negative plates are sequentially stacked, and may further include a separator between the positive and negative plates.

The casing 12 is provided in the form of enclosing the electrode assembly 11 to configure the exterior of the battery cell 10, and may protect the electrode assembly 11 from external impact. In addition, the casing 12 may seal the electrode assembly 11 from the outside. The battery cell 10 includes an electrode tab 13 extending in a longitudinal direction, and the electrode tab 13 is connected to an electrode plate (a positive electrode plate or a negative electrode plate) of the electrode assembly 11.

The casing 12 may be provided in the form of sandwiching the electrode assembly 11 from both sides. For example, the casing 12 may include a first casing 12a enclosing an upper portion of the electrode assembly 11 and a second casing 12b enclosing a lower portion of the electrode assembly 11. The inner portion of the casing 12 surrounds the electrode assembly 11, and the peripheral portion may be bonded to a peripheral portion of the opposite casing 12. For example, the first casing 12a and the second casing 12b are bonded to each other at the edge portion. In this case, the first casing 12a and the second casing 12b may be provided as a single casing 12. That is, one casing 12 surrounds the electrode assembly 11 over the top and bottom, and may be bonded on the periphery of the other side portions (for example, the right long side and two short sides of the battery cell 10 of FIG. 1) except for one side (for example, the left long side of the battery cell 10 in FIG. 1) of the electrode assembly 11, to seal the electrode assembly 11 from the outside.

In embodiments, the battery cell 10 may include a body portion 10a and a sealing portion 10b. The body portion 10a accommodates the electrode assembly 11 and means a portion having a thickness corresponding to the electrode assembly 11. A cross-section of the body portion 10a may include the electrode assembly 11 and the casing 12 covering both sides of the electrode assembly 11. The sealing portion 10b may mean a thin portion extending from at least one edge of the body portion 10a in the longitudinal direction (or in a direction perpendicular to the stacking direction). For example, the sealing portion 10b may be a portion in which the casing is overlapped and joined when one sheet of the casing is folded. Accordingly, the cross-section of the sealing portion 10b may be composed of two layers of casing.

Referring to FIG. 2, the sealing portion 10b of the battery cell 10 may be gradually folded through a plurality of folding processes. In this case, the respective folding processes may be performed by one folding process unit or sequentially by individual folding process units . As illustrated in FIG. 2, the sealing portion 10b of the battery cell 10 is folded one or more times through a plurality of folding processes, and for example, is folded about 90 degrees in a first folding process, and may be folded again by 90 degrees in a second folding process, to be in a folded state by 180 degrees. In addition, in a third folding process, it may be additionally folded by 90 degrees. Finally, the sealing portion 10b may be positioned adjacent to the side wall (14 of FIG. 1) of the body portion 10a.

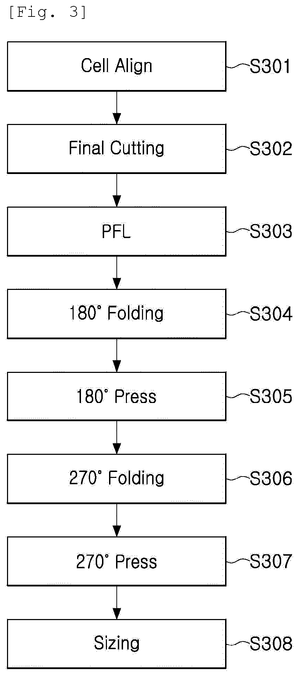

On the other hand, the sealing portion 10b illustrated in FIG. 2 means a portion in which the electrode tab 13 is not located, from among portions remaining after wrapping the electrode assembly 11 among the casing 12 of the battery cell 10 of FIG. 1. That is, the sealing portion 10b of FIG. 2 may correspond to the upper part of the battery cell 10 among the extra parts remaining after the casing 12 of the battery cell 10 of FIG. 1 surrounds the electrode assembly 11. However, this is an example, and when a sealing portion is formed on four surfaces by overlapping two sheets of the casing 12, a process of folding the upper portion and the lower portion where the electrode tab 130 is not located may be performed several times. The sealing portion 10b described in the following FIGS. 3 to 7 corresponds to the sealing portion 10b of FIG. 2, and overlapping descriptions will be omitted.

In addition, although the folding process is illustrated in FIG. 2 as going through four steps, this is only an example, and the folding process may include two, three, or five or more folding processes.

Referring to FIG. 3, a folding process according to embodiments will be described in more detail. The battery cell and constituent portions thereof described in FIG. 3 correspond to the battery cell and the constituent portions described in FIGS. 1 and 2, and overlapping descriptions will be omitted.

Prior to folding the sealing portion (for example, 10b of FIG. 1) of the battery cell (for example, 10 in FIG. 1), the positions of the battery cells are aligned in an alignment step (S301) . That is, in the alignment step, in order to accurately fold the sealing portion in a desired position, the battery cell is positioned appropriately.

After positioning the battery cell properly, a cutting step (S302) of cutting to a predetermined length is performed so that the sealing portion of the battery cell may be folded by a specified length.

Before the folding process proceeds, a PFL (Pre Forming Location) step (S303) of pre-forming the corresponding folding line to prevent meandering during folding is performed.

The sealing portion of the battery cell that has undergone the PFL step S303 is folded at least once in a first folding step S304 so that the end of the sealing portion faces the sidewall of the body portion of the battery cell. That is, in the first folding step (S304), the sealing portion is folded by 180 degrees (refer to the third figure of FIG. 2).

A first pressing step (S305) is performed by pressing the sealing portion folded by 180 degrees with heat and pressure. Heat and pressure are applied to the folded part to maintain the folded shape.

The folded sealing portion is folded at least once again in a second folding step (S306) so that the sealing portion faces in the width direction of the battery cell. That is, in the second folding step (S306), the sealing portion is folded by 90 degrees in the same direction as the folded direction in the first folding step (refer to the fourth figure in FIG. 2).

Thereafter, the folded sealing portion is pressed and molded by heat and pressure. Heat and pressure are applied to the folded part to maintain the folded shape.

In a sizing step (S308), the folded sealing portion is passed through a sizing roller to form the sealing portion adjacent to the sidewall of the body portion of the battery cell. Accordingly, the folded sealing portion is adjacent to the sidewall of the body portion of the battery cell at an acute angle.

However, in the folding process of the embodiments, at least a portion of the various processes described in FIG. 3 may be omitted or additionally added. In addition, the order of the various processes described in FIG. 3 is not limited to the illustration, and any two or more processes may be performed at the same time or in a different order.

Hereinafter, an apparatus for manufacturing a battery cell according to embodiments in which at least a portion of the folding processes described with reference to FIG. 3 is performed will be described in detail.

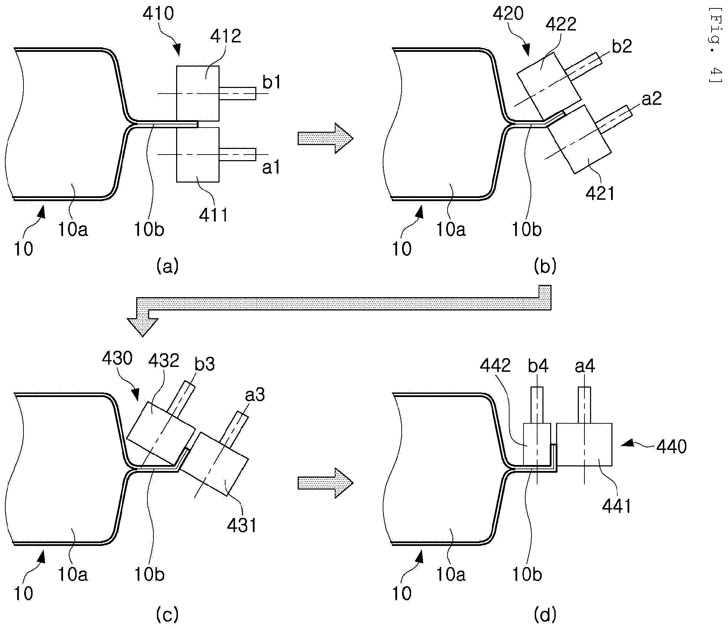

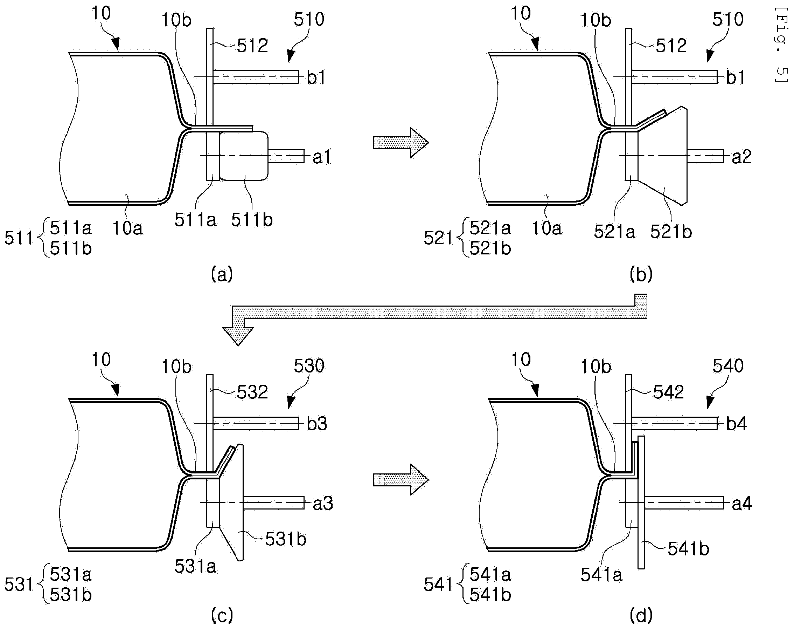

In embodiments, the first folding step (for example, S304 of FIG. 3) of folding the sealing portion by 180 degrees may be performed by an apparatus for manufacturing a first battery cell described in FIG. 4 or FIG. 5 and an apparatus for manufacturing a second battery cell described in FIGS. 5 to 8. For example, the sealing portion may be first folded by 90 degrees by the apparatus for manufacturing a first battery cell and then further folded by 90 degrees by the apparatus for manufacturing a second battery cell, to be folded by a total of 180 degrees.

First, with reference to FIG. 4, an apparatus for manufacturing a first battery cell will be described, in which at least a portion of the first folding step (for example, S304 of FIG. 3) may be performed.

The apparatus for manufacturing a first battery cell folds the sealing portion 10b of the battery cell 10. For example, as sequentially illustrated in FIGS. 4A to 4D, the apparatus for manufacturing a first battery cell continuously folds the sealing portion 10b of the battery cell 10 such that the end of the sealing portion 10b of the battery cell 10 faces the body portion 10a of the battery cell 10. That is, the sealing portion 10b of the battery cell 10 may be folded by 90 degrees by the apparatus for manufacturing a first battery cell.

In embodiments, the apparatus for manufacturing a first battery cell may include a plurality of folding units 410, 420, 430, and 440, and the plurality of folding units 410, 420, 430 and 440 may be arranged side by side in one direction. For example, as in the sequence illustrated in FIGS. 4A, 4B, 4C, and 4D, the folding units 410, 420, 430, and 440 may include a first folding unit 410, a second folding unit 420, a third folding unit 430, and a fourth folding unit 440, which gradually bend the sealing portion 10b. The folding units 410, 420, 430, and 440 may move relative to the battery cell 10 to bend the sealing portion 10b of the battery cell at various angles.

In embodiments, one folding unit (for example, 410) may include at least two rollers (for example, 411 and 412) . For example, as illustrated in FIG. 4, the first folding unit 410 may include a first roller 411 and a second roller 412 having rotation axes a1 and b1 parallel to each other. The sealing portion 10b of the battery cell 10 may pass between the first roller 411 and the second roller 412 while being in contact with the roller surfaces of the first roller 411 and the second roller 412. The distance between the two rollers 411 and 412 may be set differently according to the thickness of the casing of the battery cell 10 to be folded by the apparatus for manufacturing a first battery cell. For example, when the thickness of the casing of the battery cell 10 is about 270 µm, the two rollers 411 and 412 may move to each other to adjust positions such that the casing of about 270 um may be sandwiched between the two rollers 411 and 412.

In embodiments, in the apparatus for manufacturing a first battery cell, the plurality of folding units 410, 420, 430, and 440 may be provided by sequentially different angles at which they are installed in one direction. That is, the plurality of folding units 410, 420, 430, and 440 arranged from the inlet side to the outlet side of the apparatus for manufacturing a first battery cell may be arranged side by side in the transfer direction of the battery cell 10 at installation angles thereof changed sequentially. For example, the first folding unit 410 installed first on the inlet side of the apparatus for manufacturing a first battery cell may include rollers 411 and 412 having rotation axes a1 and b1 parallel to a reference plane (for example, the ground), the second folding unit 420 installed to be spaced apart from the first folding unit in the transport direction of the battery cell 10 includes rollers 421 and 422 having rotation axes a2 and b2 at a predetermined angle with the reference plane (the ground), and the third folding unit 430 installed on the rear of the second folding unit 420 may include rollers 431 and 432 having rotation axes a3 and b3 having a greater angle with the reference plane (ground). The angle formed by the rollers of the folding unit with the reference plane (ground) gradually increases in the transport direction of the battery cell 10, and the fourth folding unit 440 finally installed on the outlet side of the apparatus for manufacturing a first battery cell may include rollers 441 and 442 having rotation axes a4 and b4 perpendicular to the reference plane (ground).

In embodiments, the rollers included in each of the folding units 410, 420, 430, and 440 may have different sizes. For example, the upper roller (that is, the second roller in respective folding units) of the folding units 410, 420, 430 and 440 gradually moves in the transport direction of the battery cell 10 to approach the body portion 10a of the battery cell 10, and may thus be configured to have a gradually smaller size in order to prevent interference with the body portion 10a. That is, as illustrated in FIG. 4, the size of the second roller 442 included in the fourth folding unit 440 may be smaller than the size of the second roller 412 included in the first folding unit 410. However, the sizes of the rollers included in the folding units 410, 420, 430, and 440 are not limited to the illustration, and may be variously modified within a range that does not interfere with the battery cell 10.

FIG. 4 illustrates a total of four folding units 410, 420, 430, and 440, but this is only an example, and the number of folding units 410, 420, 430 and 440 included in the apparatus for manufacturing a first battery cell may be 2, 3 or 5 or more. For example, the number of folding units 410, 420, 430 and 440 installed at different angles may be changed according to how the folding angle is divided.

The battery cell 10 transferred to the apparatus for manufacturing a first battery cell is inserted between the first roller 411 and the second roller 412 of the first folding unit 410 in which the sealing portion 10b is provided on the inlet side of the apparatus for manufacturing a first battery cell. The sealing portion 10b passes through the respective rollers 411, 412, 421, 422, 431, 432, 441 and 442 provided in the plurality of folding units 410, 420, 430 and 440 and is folded corresponding to the angle at which the folding units 410, 420, 430 and 440 are installed. For example, the sealing portion 10b of the battery cell 10 enters the first folding unit 410 provided on the inlet side of the apparatus for manufacturing a first battery cell, in a state oriented in a direction parallel to the ground, and is sequentially folded by the plurality of folding units 410, 420, 430 and 440 arranged in the transport direction of the battery cell 10, and is therefore folded at an angle (for example, 90 degrees) corresponding to the angle at which the fourth folding unit 440 provided on the outlet side of the apparatus for manufacturing a first battery cell is installed.

Hereinafter, an apparatus for manufacturing a first battery cell according to other embodiments will be described with reference to FIG. 5. FIG. 5 is an illustrative view illustrating a state in which a sealing portion of a battery cell is folded by an apparatus for manufacturing a first battery cell according to embodiments.

In embodiments, the apparatus for manufacturing a first battery cell may include a plurality of folding units 510, 520, 530 and 540 for folding (bending) a sealing portion 10b of a battery cell 10.

The plurality of folding units 510, 520, 530, and 540 may be arranged side by side in one direction (for example, a transport direction of a battery cell) . As the battery cell 10 sequentially passes through the plurality of folding units 510, 520, 530, and 540, the sealing portion 10b may be gradually bent at a larger angle. For example, as illustrated in FIG. 5, the sealing portion 10b of the battery cell 10 enters the first folding unit 510 (part (a) of FIG. 5), and may then be slightly bent in the process of passing through the second folding unit 520 positioned on the rear of the first folding unit 510. The sealing portion 10b exiting the second folding unit 520 after (part (b) of FIG. 5) may be bent at a larger angle in the third folding unit 530. (Part (c) of FIG. 5) The sealing portion 10b exiting the third folding unit 530 may be bent at 90 degrees compared to the shape of the initial shape of the sealing portion 10b in the fourth folding unit 540. (Part (d) of FIG. 5)

Each of the folding units 510, 520, 530 and 540 may include a plurality of rollers. For example, as illustrated in FIG. 5, the first folding unit 510 may include a first roller 511 and a second roller 512 with roller surfaces facing each other. The first roller 511 and the second roller 512 may be rotatable, and the respective rotation axes a1 and b1 may be disposed to be approximately parallel to each other.

The first rollers 511, 521, 531, and 541 and the second rollers 512, 522, 532, and 542 may be provided in different shapes. For example, as illustrated in (b), (c) and (d) of FIG. 5, the second rollers 522, 532 and 542 may be provided as rollers having a narrow width roller surface to guide the bending point of the sealing portion 10b of the battery cell 10. The first rollers 521, 531 and 541 have a wide width to bend the sealing portion 10b based on the bending point set by the second rollers 522, 532 and 542, and may be provided as rollers in a shape in which the roller surfaces are inclined with respect to the rotation axis a2, a3 and a4.

In embodiments, the inclination of the roller surfaces of the first rollers 511, 521, 531, and 541 may be configured to gradually increase in the arrangement direction of the folding units 510, 520, 530, and 540. As the inclination of the roller surface increases, the sealing portion 10b in contact with the roller surfaces may also be bent at a gradually wide angle.

In embodiments, the roller surfaces of the first rollers 511, 521, 531, and 541 may be divided into a plurality of regions. For example, the first rollers 511, 521, 531 and 541 may be divided into first regions 511a, 521a, 531a and 541a facing the roller surfaces of the second rollers 512, 522, 532 and 542 and supporting the sealing portion of the battery cell, and second regions 511b, 521b, 531b and 541b bent by pressing the sealing portion 10b.

Although not illustrated in the drawing, the first regions 511a, 521a, 531a and 541a of the first rollers 511, 521, 531 and 541 and the second rollers 512, 522, 532 and 542 may further include a guide protrusion (not illustrated) for forming a stable bending point of the sealing portion 10b. For example, on the outer peripheral surfaces of the second roller 512, 522, 532 and 542, guide protrusions (not illustrated) may be formed to protrude in the direction toward the first rollers 511, 521, 531 and 541 to press the sealing portion 10b. A guide groove (not illustrated) corresponding to a shape of the guide protrusion (not illustrated) may be disposed in the first regions 511a, 521a, 531a, and 541a of the first rollers 511, 521, 531, and 541. The sealing portion 10b in contact with the second regions 511b, 521b, 531b, and 541b of the first rollers 511, 521, 531, and 541 may be bent (rotated) around the bending point by the pressing of the second regions 511b, 521b, 531b and 541b of the first rollers 511, 521, 531 and 541. As such, by forming the bending point in the sealing portion 10b, the bent position may always be kept constant.

The plurality of folding units included in the apparatus for manufacturing a first battery cell illustrated in FIG. 5 may be configured with rollers whose rotational axis is parallel to a reference plane (for example, the ground). With this structure, the sealing portion may be folded at a stable angle while the roller arrangement structure is simple. In addition, the installation of the folding units may be easier, and the overall size of the manufacturing apparatus may be kept small.

The battery cell 10 in which the sealing portion 10b is folded by the apparatus for manufacturing a first battery cell may be transferred to an apparatus for manufacturing a second battery cell.

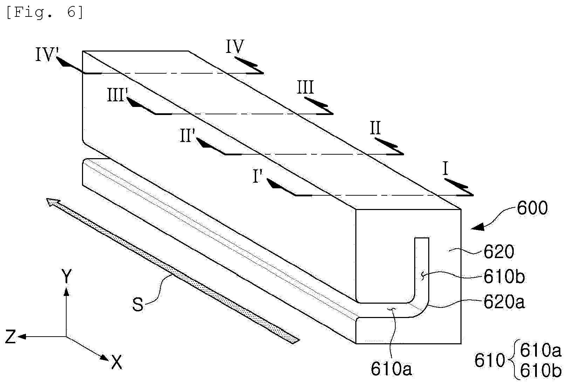

Hereinafter, an apparatus 600 for manufacturing a second battery cell 600 will be described with reference to FIGS. 6 to 8. The apparatus 600 for manufacturing a second battery cell may fold the sealing portion 10b of the battery cell 10 by 180 degrees. In embodiments, the apparatus 600 for manufacturing a second battery cell may fold the sealing portion 10b of the battery cell 10 in the same direction as the folding direction in the apparatus for manufacturing a first battery cell.

The apparatus 600 for manufacturing a second battery cell may include a molding member (mold body portion 620) for folding, and a molded groove 610 formed in the molding member. The molding member 620 may be formed to extend to a predetermined length in one direction (for example, the X-axis direction of FIG. 6). The molded groove 610 may be configured to penetrate through the molding member 620 in one direction, and the sealing portion 10b of the battery cell 10 may be inserted into the molded groove 610 and bent while moving in a predetermined direction (for example, the arrow S direction in FIG. 6).

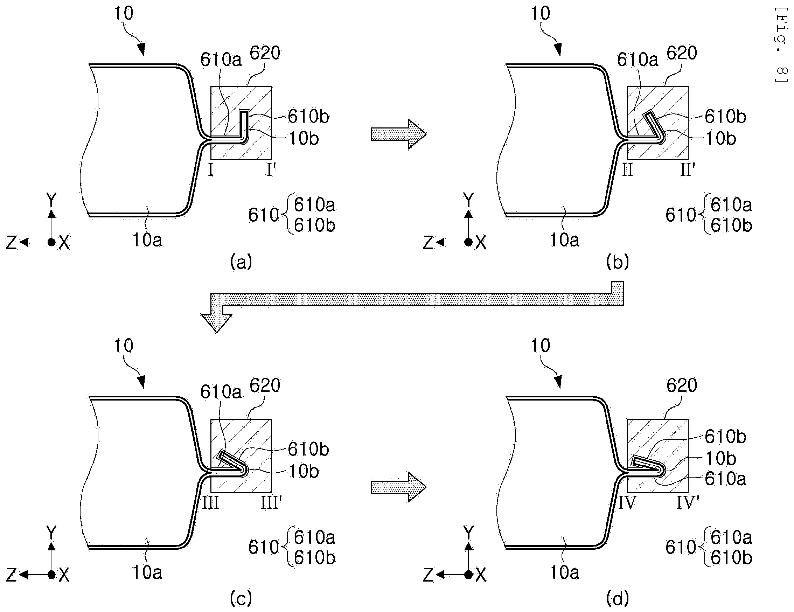

In embodiments, the moldedgroove 610 continues continuously in one direction (for example, the X-axis direction of FIG. 6), and the cross-sectional shape of the molded groove 610 may be continuously changed in one direction (the X-axis direction of FIG. 6). FIG. 8 provides cross-sectional views of portions I-I', II-II', III-III', and IV-IV' in FIG. 6, respectively. As illustrated in FIG. 8, the molded groove 610 may be configured in different shapes in respective positions, and accordingly, the sealing portion 10b may be gradually bent corresponding to the shape of the molded groove 610 while passing through respective portions of the molded groove 610.

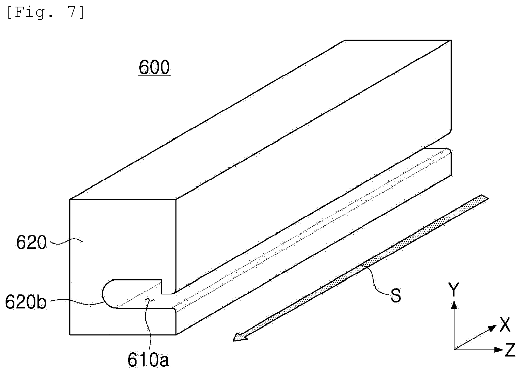

In embodiments, the molded groove 610 may form an inlet 620a into which the sealing portion 10b may enter at one end of the molding member 620, and may form an outlet 620b through which the sealing portion may exit at the other end of the molding member 620. For example, FIG. 6 illustrates the state of the inlet 620a formed in the molding member 620, and FIG. 7 illustrates the state of the outlet 620b formed in the molding member 620. As illustrated in the drawing, the inlet 620a and the outlet 620b of the molding member 620 may have different shapes. For example, the molded groove 610 forming the inlet 620a may have a shape bent at approximately 90 degrees, and the molded groove 610 is gradually changed in shape in one direction (X-axis direction in FIG. 6), and may be configured in a shape in which bent portions are combined into one at the outlet 620b. According to the shape of the molded groove 610, the sealing portion 10b entering the inlet 620a may be gradually bent corresponding to the shape change of the molded groove 610, and may exit the molding member in a folded state of approximately 180 degrees upon reaching the exit 620b.

In embodiments, the molded groove 610 may include a first molded groove 610a having a shape open toward one side of the molding member 620, and a second molded groove 610b connected to the first molded groove 610a and inclined with respect to the first molded groove 610a.

In embodiments, the first molded groove 610a may be configured as a groove parallel to the reference plane (for example, the X-Z plane in FIG. 6), and the second molded groove 610b may have a shape inclined with respect to the reference plane (or the first molded groove). Accordingly, a predetermined angle may be formed between the second molded groove 610b and the first molded groove 610a.

In embodiments, the angle between the first molded groove 610a and the second molded groove 610b may vary continuously in one direction (for example, the S direction of FIG. 6).

In embodiments, the second molded groove 610b of the molding member 620 may be formed in a continuous spiral shape in one direction (for example, the X-axis direction of FIG. 6) . For example, as illustrated in FIG. 8, the second molded groove 610b of the molding member 620 may be formed in a spiral shape in which a bent angle is continuously changed. The end of the second molded groove 610b in the I-I' portion of the molding member 620 is provided to be perpendicular to the ground (part (a) of FIG. 8), and in the II-II' part, the end of the second molded groove 610b may be formed in a state in which it rotates counterclockwise compared to the I-I' part (FIG. 8(b) part). The end of the second molded groove 610b in the III-III' part of the molding member 620 may be formed in a state rotated counterclockwise compared to the II-II' part, and the end of the second molded groove 610b in the IV-IV' part may be formed in a state in which it rotates counterclockwise compared to the III-III' part.

In embodiments, the sealing portion 10b of the battery cell 10 is relatively transferred in one direction (for example, the arrow S direction in FIGS. 6 and 7) while being inserted into the molded groove 610 of the molding member 620, and is folded corresponding to the shape of the molded groove 610 continuously formed in the transfer direction. Since the angle at which the molded groove 610 is bent is continuously changed in the longitudinal direction (for example, the X-axis direction in FIGS. 6 and 7) of the molding member 620, correspondingly, the sealing portion 10b of the battery cell 10 is also continuously folded in a shape corresponding thereto. For example, the sealing portion 10b of the battery cell 10 is continuously folded while passing through the apparatus 600 for manufacturing a second battery cell, and may be folded by 180 degrees based on the direction in which the end of the sealing portion 10b faces before going through the apparatus for manufacturing a first battery cell.

In embodiments, while the position of the battery cell 10 is fixed, the molding member 620 is transferred in one direction (for example, the arrow S direction in FIGS. 6 and 7) to fold the sealing portion 10b of the battery cell 10. In addition, the battery cell 10 is transferred in one direction (for example, the arrow S direction in FIGS. 6 and 7), and the molding member 620 may be transferred in a direction opposite to the transfer direction of the battery cell 10 to fold the sealing portion 10b of the battery cell 10.

The battery cell passing through the apparatus for manufacturing a second battery cell may enter an apparatus for manufacturing a third battery cell, and the apparatus for manufacturing a third battery cell may perform a second folding step (for example, S306 of FIG. 3).

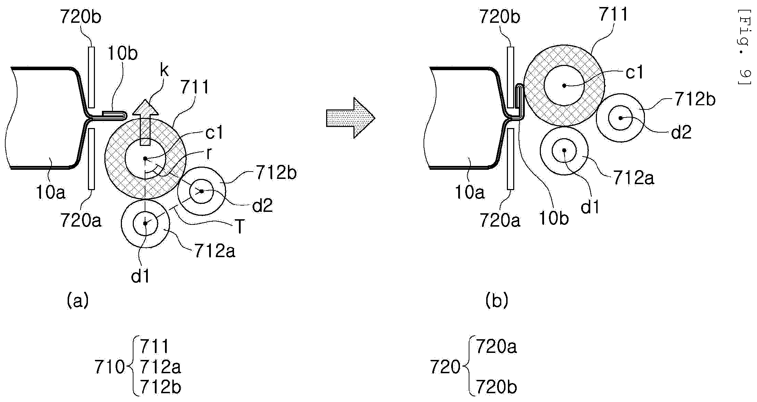

Hereinafter, the apparatus for manufacturing a third battery cell will be described with reference to FIG. 9. FIG. 9 is an illustrative view illustrating a state in which the sealing portion 10b of the battery cell 10 is folded by the apparatus for manufacturing a third battery cell according to embodiments.

The apparatus for manufacturing a third battery cell may fold the sealing portion 10b of the battery cell 10 folded through the first and second battery cell manufacturing apparatuses described above with reference to FIGS. 4 to 8. In embodiments, the apparatus for manufacturing a third battery cell may fold the sealing portion 10b of the battery cell 10 in the same direction as the folding direction in the first and second battery cell manufacturing apparatuses.

The apparatus for manufacturing a third battery cell includes a support unit 720 supporting the sealing portion 10b of the battery cell 10, and a folding unit 710 folding the sealing portion 10b in a state supported by the support units 720.

In embodiments, the support unit 720 of the apparatus for manufacturing a third battery cell may include at least two support members 720a and 720b. For example, as illustrated in FIG. 9, the support unit 720 may include a first support member 720a and a second support member 720b provided to face each other. At least a portion of the battery cell 10 may be fixed between the first support member 720a and the second support member 720b. For example, the first support member 720a and the second support member 720b move in a direction to be closer to each other, and the boundary between the body portion 10a and the sealing portion 10b of the battery cell 10 may be inserted therebetween and supported. Here, the 'boundary' is a portion extending from the body portion 10a to the sealing portion 10b, and may be a portion adjacent to the terrace of the body portion 10a. Accordingly, the body portion 10a may be located on any one side (that is, one side) and the sealing portion 10b may be located on another side (that is, the other side), with the support unit 720 in the middle. For example, as illustrated in FIG. 9, one side of the support unit 720 may face the narrow side of the body portion 10a, and the sealing portion 10b extending from the body portion 10a passes through the first support member 720a and the second support member 720b and protrudes from the other side of the support unit 720 to be supported by the support unit 720.

In embodiments, the folding unit 710 may press the sealing portion 10b to be bent, while moving along the other side of the support unit 720. The folding unit 710 is provided adjacent to the support unit 720, and may be slidably driven along the other side of the support unit 720 in one direction (for example, the arrow k direction in FIG. 9). The moving direction of the folding unit 710 may be a direction from the first support member 720a to the second support member 720b. Alternatively, the moving direction of the folding unit 710 may be a direction substantially parallel to one surface of the second support member 720b. However, the moving direction of the folding unit 710 is not limited to the description above, and the folding unit may move in any direction as long as it may contact the sealing portion and bend the sealing portion.

In embodiments, when one surface of the support unit 720 faces the body portion of the battery cell, the folding unit 710 may move along the other surface of the support unit 720. Accordingly, the folding unit 710 may push up and bend the sealing portion 10b of the battery cell 10 so as to be in close contact with the support unit 720.

The folding unit 710 may include at least one roller 711, 712a, 712b. For example, the folding unit 710 may include a pressure roller 711 for pushing and folding the sealing portion 10b of the battery cell 10, and auxiliary rollers 712a and 712b supporting the pressure roller 711.

In embodiments, the length of the pressure roller 711 may be greater than or equal to the length of the battery cell 10 being folded. Accordingly, the pressure roller 711 may move to contact the overall sealing portion 10b of the battery cell 10 in the longitudinal direction.

There is a risk that the pressure roller 711 may deviate from an original position or be bent due to the repulsive force received from the sealing portion 10b in the process in which the pressure roller 711 folds the sealing portion 10b. For example, in the case of a long-width cell, it may have a width of about 600 mm or more, and as the length of the long-width cell increases, a greater force is applied to the pressure roller 711 in the process of folding the sealing portion 10b. To prevent this, in embodiments, one or more auxiliary rollers 712a and 712b adjacent to the pressure roller 711 may be disposed to support the pressure roller 711.

The auxiliary rollers 712a and 712b may be configured to move together with the pressure roller 711. That is, the auxiliary rollers 712a and 712b may move in the moving direction of the pressure roller (for example, the arrow k direction in FIG. 9) while maintaining contact with the pressure roller 711.

In embodiments, the diameter of the auxiliary rollers 712a and 712b may be equal to or smaller than the diameter of the pressure roller 711. For example, as illustrated in FIG. 9, two auxiliary rollers 712a and 712b having a relatively small diameter may be disposed in contact with different portions of the pressure roller 711 having a relatively large diameter.

In embodiments, in order to stably support the pressure roller 711, a plurality of auxiliary rollers 712a and 712b may be provided adjacent to respective different positions of the pressure roller 711. For example, as illustrated in FIG. 9, the auxiliary rollers 712a and 712b may include a first auxiliary roller 712a and a second auxiliary roller 712b adjacent to different sides of the pressure roller 711. Accordingly, the first auxiliary roller 712a and the second auxiliary roller 712b may support the pressure roller 711 in different directions respectively.

In embodiments, the pressure roller 711 and the auxiliary rollers 712a and 712b may be configured to be rotatable, respectively. In this case, a rotation shaft c1 of the pressure roller 711 and rotation axes d1 and d2 of the auxiliary rollers 712a and 712b may be substantially parallel to each other.

In embodiments, virtual lines connecting the rotation center c1 of the pressure roller 711 and rotation centers d1 and d2 of the auxiliary rollers 712a and 712b may meet each other to form a triangle T. In this case, the triangle may be an isosceles triangle.

In embodiments, a virtual line connecting the rotation center c1 of the pressure roller 711 and the rotation center d1 of the first auxiliary roller 712a, and a virtual line connecting the rotation center c1 of the pressure roller 711 and the rotation center d2 of the second auxiliary roller 712b may meet each other to form an acute angle. According to this structure, the repulsive force received from the sealing portion while the pressure roller 711 moves in one direction (arrow k direction in Fig. 9) is properly distributed to the two auxiliary rollers 712a and 712b and acts, thereby effectively supporting the pressure roller 711.

In embodiments, in a state in which the battery cell 10 is fixed by the support unit 720, the folding unit 710 moves in one direction (for example, the arrow k direction in FIG. 9) to push and fold the sealing portion 10b of the battery cell 10. For example, as illustrated in FIG. 9, the pressure roller 711 may move from a first position facing the first support member 720a to a second position facing the second support member 720b, and may press the sealing portion 10b in the process of moving. The sealing portion 10b pressed by the pressure roller 711 may be bent to come into contact with the second support member.

In embodiments, the position of the pressure roller 711 in the folding unit 710 may be changed as needed. Accordingly, the pressure roller 711 may push the sealing portion 10b at various angles. For example, as illustrated in FIG. 9, the position of the pressure roller 711 may be set so that the end of the sealing portion 10b is at a position spaced apart from the path in which the central axis c1 of the pressure roller 711 moves. In this case, the pressure roller 711 may be folded in contact with the sealing portion 10b in an oblique direction.

In embodiments, the folding direction by the pressure roller 711 may be the same as the folding direction through the first and second battery cell manufacturing apparatuses described above with reference to FIGS. 4 to 8. For example, in the apparatus for manufacturing a first battery cell of FIG. 4 or 5, at least a partial area of the sealing portion 10b of the battery cell 10 is folded counterclockwise by 90 degrees, and in the apparatus for manufacturing a second battery cell of FIG. 6, at least a partial area folded in the apparatus for manufacturing a first battery cell is again folded by 90 degrees counterclockwise, and may be folded 180 degrees in a counterclockwise direction. Thereafter, in the apparatus for manufacturing a third battery cell of FIG. 9, the folded at least a partial area of the sealing portion 10b and the other area facing the at least partial area may be folded together in a counterclockwise direction by 90 degrees. Accordingly, by passing through the first to third battery cell manufacturing apparatuses, the at least a partial area of the battery cell 10 may be rotated counterclockwise by a total of 270 degrees to be folded adjacent to the body portion (10a of FIG. 1) of the battery cell 10.

Since both the apparatus for manufacturing a third battery cell and the apparatus for manufacturing a first battery cell may fold the sealing portion 10b of the battery cell 10 by approximately 90 degrees, both battery cell manufacturing apparatuses are interchangeable. For example, in embodiments, the first folding step (for example, S304 in FIG. 3) may be performed by the apparatus for manufacturing a third battery cell described in FIG. 9 and the apparatus for manufacturing a second battery cell described in FIGS . 6 to 8 sequentially. That is, while the support unit 720 of the apparatus for manufacturing a third battery cell supports the battery cell 10, a portion of the first folding step (S304 of FIG. 3) may be performed as the pressure roller 711 of the apparatus for manufacturing a third battery cell pushes up the sealing portion 10b in one direction and folds the same by 90 degrees. For a detailed description thereof, reference may be made to the description of FIG. 9.

In the above, the configuration and features of the present disclosure have been described based on the embodiments according to the present disclosure, but the present disclosure is not limited thereto. It is apparent to those skilled in the art that various changes or modifications may be made within the spirit and scope of the present disclosure, and accordingly, it is disclosed that such changes or modifications fall within the scope of the appended claims.

### Mode for Invention

Various modifications and variations of the present disclosure will be possible without departing from the essential characteristics of the present disclosure by those skilled in the art to which the present disclosure pertains.

Therefore, the embodiments disclosed in the present disclosure are not intended to limit the technical spirit of the present disclosure, but to explain, and the scope of the technical spirit of the present disclosure is not limited by these embodiments.

The protection scope of the present disclosure should be interpreted by the claims, and all technical ideas within the scope equivalent thereto should be interpreted as being included in the scope of the present disclosure.

### Industrial Applicability

As described above, the features of the present disclosure may be applied in whole or in part to an apparatus for manufacturing a battery cell.

### [Sequence List Free Text]

- 10:: battery cell
- 10a:: body portion
- 10b:: sealing portion
- 600:: apparatus for manufacturing a second battery cell
- 610:: molded groove
- 620:: molding member (mold body portion)
- 710:: folding unit
- 711:: pressure roller

- *119712a, 712b:: auxiliary roller
- 720:: support unit

## Claims

1. An apparatus for manufacturing a battery cell, comprising:
a body portion having rigidity; and
a molded groove configured to allow at least a portion of the sealing portion of the battery cell to be inserted and passed therethrough,
wherein the molded groove penetrates the body portion in a first direction, and
a shape of the molded groove is changed in the first direction.

2. The apparatus for manufacturing a battery cell of claim 1, wherein the molded groove comprises:
an inlet disposed at one end of the body portion in the first direction and configured to allow the sealing portion to be inserted; and
an outlet disposed at the other end in the first direction and configured to allow the sealing portion to exit.

3. The apparatus for manufacturing a battery cell of claim 2, wherein shapes of the inlet and the outlet are different from each other.

4. The apparatus for manufacturing a battery cell of claim 1, wherein the molded groove includes,
a first molded groove open in a second direction, perpendicular to the first direction, at one side of the body portion; and
a second molded groove connected to the first molded groove and inclined with respect to the first molded groove.

5. The apparatus for manufacturing a battery cell of claim 4, wherein an angle between the first molded groove and the second molded groove is continuously changed in the first direction.

6. The apparatus for manufacturing a battery cell of claim 5, wherein the angle between the first molded groove and the second molded groove gradually decreases in the first direction.

7. The apparatus for manufacturing a battery cell of claim 5, wherein an angle between the first molded groove and the second molded groove at an end of the body portion in the first direction is perpendicular.

8. The apparatus for manufacturing a battery cell of claim 1, wherein the body portion is configured to be movable in the first direction.

9. An apparatus for manufacturing a battery cell, comprising:
a support unit configured to support a sealing portion of a battery cell, wherein one side of the support unit is configured to face a body portion in which an electrode assembly of the battery cell is accommodated; and
a folding unit facing the other side opposite to the one side of the support unit and configured to bend the sealing portion of the battery cell,
wherein the folding unit is configured to be movable along the other side of the support unit to bend the sealing portion of the battery cell.

10. The apparatus for manufacturing a battery cell of claim 9, wherein the support unit includes a first support member and a second support member configured to be movable in different directions,
wherein the first support member and the second support member are configured such that the sealing portion of the battery cell can be fixed therebetween.

11. The apparatus for manufacturing a battery cell of claim 10, wherein the first support member and the second support member are configured to support a boundary between the body portion and the sealing portion.

12. The apparatus for manufacturing a battery cell of claim 10, wherein the folding unit includes a pressure roller configured to be movable from a first position facing the first support member to a second position facing the second support member,
wherein the pressure roller is configured to bend the sealing portion so that the sealing portion comes into contact with the second support member.

13. The apparatus for manufacturing a battery cell of claim 12, wherein the folding unit further includes an auxiliary roller supporting the pressure roller,
wherein the auxiliary roller is configured to move together in contact with the pressure roller.

14. The apparatus for manufacturing a battery cell of claim 13, wherein a diameter of the auxiliary roller is equal to or less than a diameter of the pressure roller.

15. The apparatus for manufacturing a battery cell of claim 13, wherein the pressure roller and the auxiliary roller are respectively rotatable, and
an axis of rotation of the auxiliary roller is parallel to an axis of rotation of the pressure roller.

16. The apparatus for manufacturing a battery cell of claim 15, wherein the auxiliary roller includes a first auxiliary roller and a second auxiliary roller in contact with different portions of the pressure roller, and
wherein an angle between a virtual line connecting a center of rotation of the pressure roller and a center of rotation of the first auxiliary roller and a virtual line connecting the center of rotation of the pressure roller and a center of rotation of the second auxiliary roller is an acute angle.
